# EUROPEAN PATENT SPECIFICATION

(11) **EP 3 688 709 B1**
(45) Date of publication and mention of the grant of the patent: **16.07.2025**
(21) Application number: 18779602.4
(22) Date of filing: 21.09.2018
(51) Int. Cl.: G06Q 20/38, G06Q 20/34

(54) **PAYMENT TERMINAL DEVICE AND METHOD**
ZAHLUNGSTERMINAL UND VERFAHREN
DISPOSITIF ET PROCÉDÉ DE TERMINAL DE PAIEMENT

(30) Priority: 27.09.2017 SG 10201707972T
(43) Date of publication of application: 05.08.2020
(73) Proprietor: Global Blue S.A., 1274 Signy (CH)
(72) Inventor: TAN, Puay Hiang, Japan Lapang 418994 (SG); LING, James Michael, Brighton, Victoria 3186 (AU)
(74) Representative: D Young & Co LLP
(86) International application number: PCT/EP2018/075675
(87) International publication number: WO 2019/063444

(56) References cited:
- WO-A1-2016/128257
- US-A1- 2004 148 255
- US-A1- 2010 036 741

## Description

### Summary

The present disclosure relates to payment terminal devices and methods of operating a payment terminal device for offering currency conversion.

### Background

In recent years, the use of contactless payments has significantly increased through the use of contactless payments carriers and contactless payment terminals, the increase being driven in part by the greater convenience provided to users for which the payment procedure has been made quicker and simpler. In this context, users can refer to either users of a payment carrier or to users of a payment terminal (if any), for example at a point-of-sale. Examples of contactless payment carrier include contactless credit or debit cards, mobile application while the use of tokenisation services has also participated in this more widespread use of contactless solutions.

However, while the contactless payment procedure appears to have been simplified from a user's perspective, specific security procedures had to be created to accommodate the fact that the payment procedure would necessarily differ from a payment procedure where a card is physically inserted in a terminal for most of the duration of the transaction. Such security procedures are critical to try to ensure that the transaction is not fraudulent and thus have to be followed as a matter of regulation and of practical considerations. An example of specifications for contactless payments is [1] "EMV^{®} Contactless Specifications for Payment Systems" Book C-3, which specifies security and authentications procedures for carrying out contactless transactions with a Europay, MasterCard, and Visa "EMV" card.

While such procedures are now relatively well established, they have been designed with a conventional transaction in mind (which still represents the vast majority of transactions carried out in the world) and are not necessarily well adapted to less conventional transactions. One example of less conventional transactions is transactions involving a currency conversion option for settling a transaction in a currency that differs from the transaction of the terminal. For example, when transactions are made with payment means that are associated with a foreign country and/or a foreign currency, the transaction can be offered in the local currency or in a currency for the payment means. As will be clear from the discussion below, current contactless payment procedures are not well adapted to address these types of situations. It can thus be desirable to provide arrangements for addresses such cases.

US 2010/036741 A1 relates to currency conversion during contactless transactions.

### Summary

The invention is defined in the appended claims.

In a first example of the present disclosure, there is provided a payment terminal device for offering currency conversion from a terminal currency to a foreign currency for a contactless payment, the terminal being associated with a terminal currency. The payment terminal device comprises a contactless payment carrier reader configured to communicate with a contactless payment carrier; a communication module configured to communicate messages with a remote location; and a controller. The controller is configured to: receive, from the contactless payment carrier reader, payment data from a contactless payment carrier for completing a transaction, the payment data comprising a cryptogram and the transaction being associated with a transaction amount in the terminal currency; store the received payment data including the cryptogram; determine whether the transaction will be completed in a foreign currency or in the terminal currency, the foreign currency being a currency that differs from the terminal currency; if it is determined that the transaction will be completed in the foreign currency, generate an authorisation request message of a first type, wherein an authorisation request message of the first type includes a foreign currency indicator identifying the foreign currency; a converted transaction amount, the converted transaction amount corresponding to the transaction amount converted to the foreign currency, a terminal currency indicator identifying the terminal currency, the transaction amount and the cryptogram; if it is determined that the transaction will be completed in the terminal currency, generate an authorisation request message of a second type, wherein an authorisation request message of the second type includes the terminal currency indicator, the transaction amount and the cryptogram; and transmit, via the communication module, the generated authorisation request message to the remote location for completing the transaction.

According to another example of the present disclosure, there is provided a method of operating a payment terminal device for offering currency conversion from a terminal currency to a foreign currency for a contactless payment, the terminal being associated with a terminal currency. The method comprises receiving, from a contactless payment carrier reader, payment data from a contactless payment carrier for completing a transaction, the payment data comprising a cryptogram and the transaction being associated with a transaction amount in the terminal currency; storing the received payment data including the cryptogram; determining whether the transaction will be completed in a foreign currency or in the terminal currency, the foreign currency being a currency that differs from the terminal currency; if it is determined that the transaction will be completed in the foreign currency, generating an authorisation request message of a first type, wherein an authorisation request message of the first type includes a foreign currency indicator identifying the foreign currency; a converted transaction amount, the converted transaction amount corresponding to the transaction amount converted to the foreign currency, a terminal currency indicator identifying the terminal currency, the transaction amount and the cryptogram; if it is determined that the transaction will be completed in the terminal currency, generating an authorisation request message of a second type, wherein an authorisation request message of the second type includes the terminal currency indicator, the transaction amount and the cryptogram; and transmitting the generated authorisation request message to the remote location for completing the transaction.

Such examples provide an arrangement which can efficiently provide currency conversion for transactions completed with a contactless payment carrier.

### List of Figures

Example implementations of the present disclosure will now be described with reference to the accompanying drawings, throughout which like parts may be referred to by like references, and in which:
Figure 1 illustrates a flow diagram of sample transaction processing using contactless payment carrier;
Figure 2 illustrates an example method of operating a payment terminal device for offering currency conversion for a contactless payment;
Figures 3A-3B illustrate an example flow diagram of a transaction processing using contactless payment carrier with currency conversion;
Figure 4 illustrates an example payment system comprising a payment terminal device; and
Figure 5 illustrates another example payment system comprising a payment terminal device.

### Example Implementations

Examples of the present disclosure will now be provided for illustrative purposes only and the skilled person will understand that the teachings provided in respect of one or more examples apply equally to any other possible examples so long as this is technically feasible.

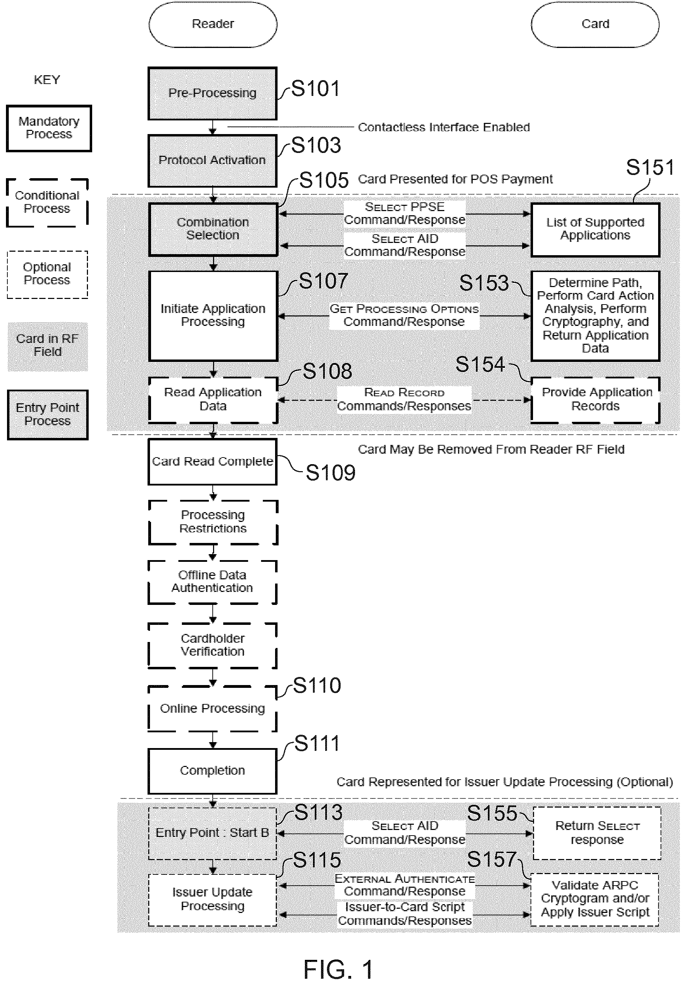

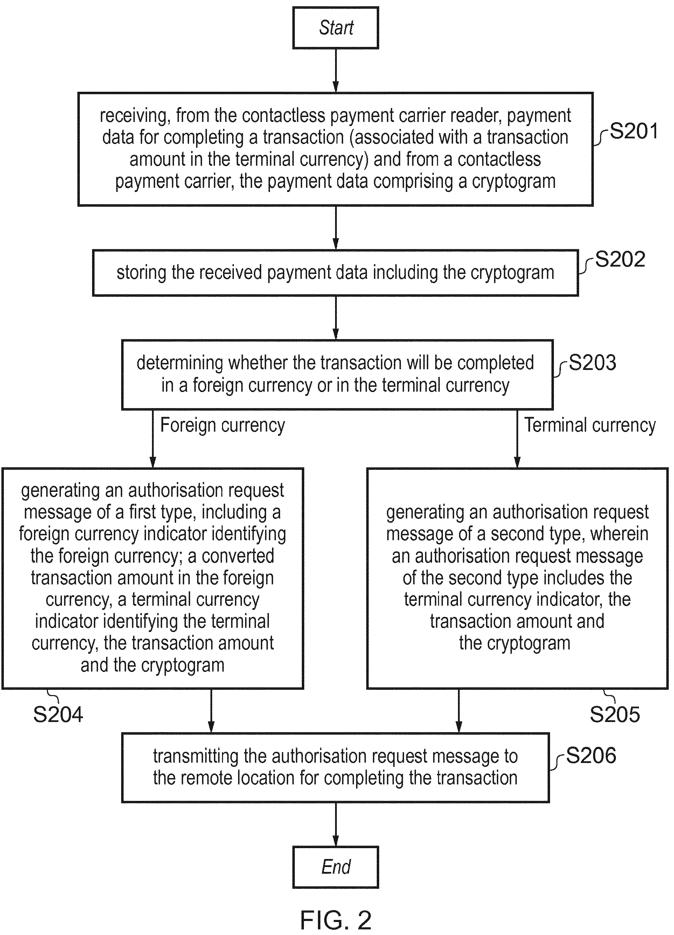

Figure 1 illustrates a flow diagram of transaction processing using a contactless payment carrier, extracted from [1], Figure 2-1 (which may have been slightly reformatted). This flow diagram is discussed in sections 2.3, 2.4 and 2.5 of this document. This flow diagram is for carrying out operations that can be any of a purchase transaction, a cash withdrawal or a refund. In most purchase transactions, it is expected that only the relevant steps of S101-S111 for the reader and of S151-S154 for the EMV card will be carried out. In some cases, where for example information is to be updated on the card, steps S113-S115 (for the reader) and S155-S157 (for the card) may also have to be carried out to complete such updates. These steps require that the contactless card be presented again, i.e. the second presentation, to the reader to complete the operation. The typical contactless experience is one presentation of the contactless card to the reader, the second presentation for card update is optional.

According to this flow, if for example a customer wishes to purchase goods or services at a Point-Of-Sale "POS" facility using a contactless foreign card (relative to the POS's currency and/or country), according to the current arrangements, the customer would have to present the card to the reader, which automatically results in the creation of a cryptogram and of an authorisation message that is transmitted (in the "Online Processing" step S110) to a remote system (relative to the POS). By default, the system is thus not designed to accommodate currency conversion when using contactless foreign cards.

In some example implementations, the current arrangement can be modified or used to accommodate currency conversion. In such examples, once the currency conversion eligibility is detected and if currency conversion is selected (e.g. after receipt of an input from the customer and/or a POS operator), the first cryptogram in the local currency for which the card was presented the first time, can be cancelled. Then a new separate transaction will be initiated using the same Application ID (AID) selected earlier, but with the foreign currency and the converted amount in the foreign currency that has been selected by the customer. However, as this is a new separate transaction, the customer will have to present the contactless card again to complete this second transaction. Examples of Application IDs are A0000000041010 = MasterCard Credit, A0000000031010 = VISA Credit, A000000025010801 = Amex. Note that a card might have multiple Application IDs. In this case, the card may give a priority to an Application ID and/or the terminal may allow the customer to choose, if the terminal accepts both Application IDs.

Accordingly, it is possible to provide a system which uses the current contactless procedures to provide a currency conversion service. However, such an arrangement will effectively require the contactless card to be presented to the reader twice or the contactless card to be left on the reader for the whole duration in order to complete the transaction in the foreign currency. Therefore, it can be desirable to provide an arrangement wherein the flow and terminal for providing currency conversion for contactless transactions have been simplified. It is noteworthy that this problem is clearly specific to contactless situations and is not faced in other cases, as in all other cases, the contact card is inserted and remained in the reader until the transaction is completed. In contrast, with contactless transactions, the card is in contact with the contactless reader for short period of time, before it is even determined whether the transaction is eligible for currency conversion and before currency conversion can be selected. Also, as an input will generally be required to determine whether to use currency conversion (so that the user/cardholder can review the exchange rate and/or converted amount and decide accordingly), the cardholder cannot reasonably be expected to keep the card in contact with the reader for the duration of the transaction. In particular the cardholder cannot be expected to keep the card in contact with the reader while the cardholder, merchant staff or any other relevant user review the currency conversion information, make a decision and then input the currency conversion selection, which may have to be performed on the contactless reader itself.

Figure 2 illustrates an example method of operating a payment terminal device for offering currency conversion for a contactless transaction. The method facilitates the completion of a contactless transaction with currency conversion from a transaction amount in a terminal currency to a converted amount in a foreign currency (relative to the terminal currency). Once the method starts, at S201, payment data (e.g. card data) from a contactless payment carrier for completing a transaction is received from the contactless payment carrier reader, the payment data comprising a cryptogram. The cryptogram is generated with transaction amount in the terminal currency and the terminal currency as the transaction currency. Additionally, the payment data may comprise any combination of one or more of: a card number, an account number, a payment token, Application Data (see for example [1]), a currency code, a country code, one or more applications or services supported by the card/payment carrier, one or more transaction amount thresholds, etc.

The received payment data, and in particular on the cryptogram, is then stored at the terminal system (S202). At this stage, the contactless card can leave the card reader.

Then, rather than generating and sending an authorisation message comprising the cryptogram straightaway as in conventional systems, the method moves to step S203 where it is determined whether the transaction will be completed in a foreign currency or in the terminal currency. For example, it can be determined that the transaction is eligible to currency conversion and if this is determined, the customer and/or a POS operator can be offered a currency conversion service. If the currency conversion offer is accepted, the currency conversion can be detected. In other examples, there can be an automatic selection of currency conversion based on any one or more the currency and/or country of the card, a currency conversion parameter set on the card, a currency conversion parameter set on the terminal, etc. In yet another example, a manual selection may be required for all transactions at the terminal (for example a terminal that is configured to operate with foreign card transactions in a store). In some cases, it can be determined that the payment carrier is a card from the same country as the terminal such that the transaction will then be completed in the local currency. Regardless of the specific currency conversion detection and/or detection technique, at S203 the terminal is able to determine whether the transaction will be carried out with a converted transaction amount in a foreign currency or with the original transaction amount in the terminal currency.

If it is determined the transaction will be completed in a foreign currency, an authorisation request message of a first type is generated. An authorisation request message of the first type includes a foreign currency indicator identifying the foreign currency; a converted transaction amount in the foreign currency, a terminal currency indicator identifying the terminal currency, the transaction amount and the cryptogram. (S204). The cryptogram is the same cryptogram generated at S201.

In some cases, the terminal will already have the exchange rate and/or converted amount (e.g. if one or both have been provided to assist with the currency conversion selection) while in other cases, one or both may be obtained once the currency conversion has been selected. Also, the suitable exchange rate can be determined in any appropriate manner. For example, it can be obtained from a local table of rates at the terminal or any other POS device (e.g. a till) that the terminal is connected to. In other example, it can be obtained from a remote system such as a currency conversion system, an exchange rate system, etc. As the skilled person will understand, these rates may be real-time rates or rates updated on a periodical basis (e.g. daily, twice daily, hourly, etc.). Also, the terminal can sometimes receive the already converted amount while in other cases it can obtain locally or remotely an exchange rate and obtain the converted amount by calculating the converted amount based on the obtained exchange rate.

In any case, once the use of currency conversion for completing the transaction has been detected, the authorisation request message of the first type can be generated to include a currency indicator identifying the foreign currency and a converted transaction amount. As discussed above, the converted transaction amount corresponds to the transaction amount converted to the foreign currency. For example, while parts of the generated authorisation message can be identical to an authorisation request message of a second type for completing the transaction in the terminal currency, e.g. the cryptogram, additional information is also included.

Then, at S206, the generated authorisation request message is transmitted to a remote location for completing the transaction. The remote location can be any of an acquirer, a bank, a currency conversion system (e.g. dedicated to the settling of transaction in a foreign currency), or any transaction settlement element (e.g. for a direct transaction between two parties that does not involve a conventional banking system).

If on the other hand, it is determined at S203 that the transaction will be completed in the terminal currency, the method proceeds to S205 where an authorisation request message of the second type is generated. An authorisation request message of the second type includes the terminal currency indicator, the transaction amount and the cryptogram. For example an authorisation request message of the second type can be a conventional authorisation request message for completing a transaction (e.g. an online transaction without currency conversion). Accordingly, the authorisation request message of the second type may not include the foreign currency indicator or the converted amount as used in the authorisation request message of the first type.

In other words, by avoiding the generation and transmission of the authorisation request message immediately after the cryptogram has been generated and communicated to the terminal, by having a deferred authorisation request message of the first type which identifies the foreign currency as the currency for settling the transaction and by having a deferred authorisation request message of the second type which identifies the terminal (merchant) currency as the currency for settling the transaction (as well as the original merchant currency for the transaction), the method illustrated in Figure 2 provides for carrying out transactions in a contactless manner using a single "tap" of the contactless card/payment carrier. This therefore enables a simplification of the payment authorisation process in a secure manner and without having to generate a second cryptogram -which would require a second "tap" of the contactless card.

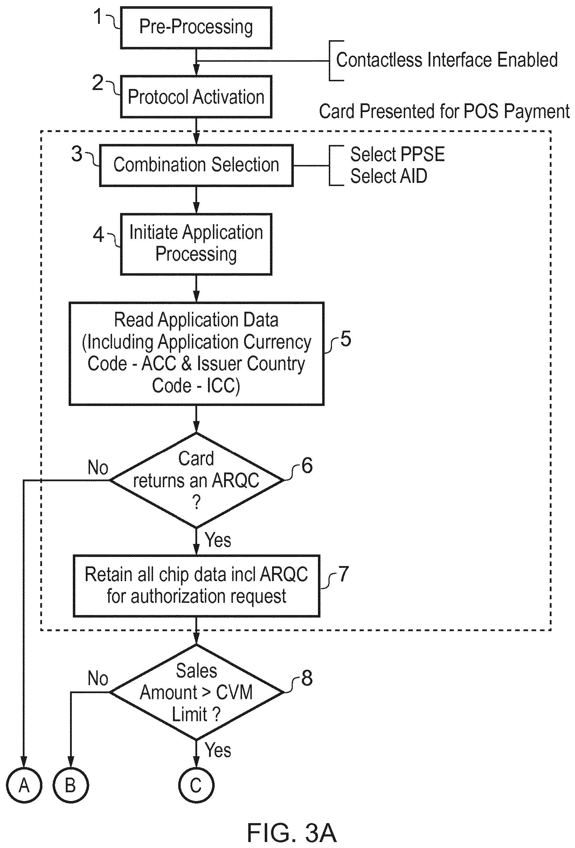

Figures 3A-3B collectively illustrate an example flow diagram of online transaction processing using contactless payment and using currency conversion. In particular, it illustrates the flow mostly from the perspective of a controller of a terminal system, the controller effectively providing a payment functionality or payment application.

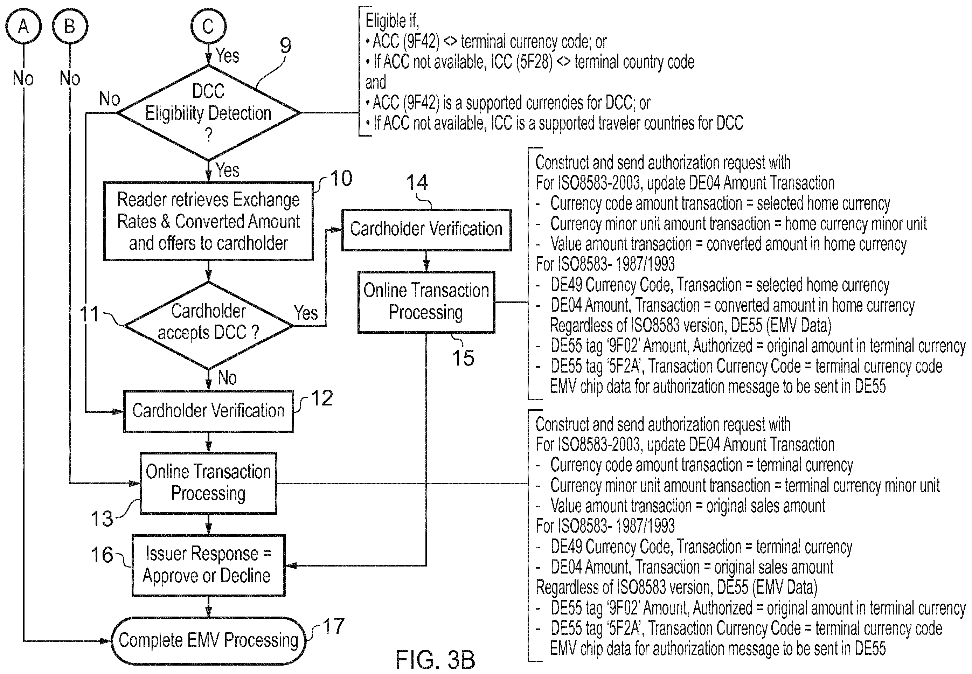

While the teachings of the present disclosure are not limited to the use of contactless payments as described in [1], as it effectively defines the specifications for most contactless EMV payments, Figure 3 (Figure 3A and 3B collectively) has been provided to illustrate an example of how it can be modified to provide a currency conversion service for a contactless transaction without a second presentation of the contactless payment means. As the skilled person will appreciate, the present disclosure is not limited to this example and the teachings provided in respect of this example apply equally to other example implementations.

According to this example implementation, a terminal system can process transactions using a contactless payment means wherein the currency conversion eligibility and processing being provided with the card being presented to the reader only once (what was referred to earlier as a single "tap").

It is noteworthy that Steps 1 to 4 can be standard EMV processing steps, for example as discussed and defined in [1] and as such will not be described in details in this document. The processing flow illustrated in Figure 3 might vary depending on the EMV kernel used. However, the teachings to offer the currency conversion remain the same such that the same or similar currency conversion steps may for example be implemented with different kernels.

Now turning to the different steps illustrated in Figure 3, as soon as the contactless card is presented to the reader after Step 2, the payment transaction begins. The payment application requests the relevant card data from the contactless card through the EMV kernel to perform an online authorisation. The payment application can for example use the transaction amount as the Authorized Amount (tag '9F02') and the terminal currency code as the Transaction Currency Code (tag '5F2A') when requesting the card data from the contactless card.

The card and EMV kernel can then for example perform standard EMV processing to select the appropriate application (Step 3), initiate the application processing (Step 4), read the application data (Step 5), and other risk management checks as deemed appropriate. In particular, at Step 5 for "Read Application Data", the card can also read the Application Currency Code (tag 9F42) and Issuer Country Code (tag 5F28) from the card, if they have not already been read in Initiate Application Processing (Step 4). After these steps, the EMV kernel shall request for an online authorisation cryptogram from the card for completing or authorising the transaction.

At Step 6, the card can for example perform card risk management and decide either to decline the transaction offline or to provide to the EMV kernel the relevant data for an online authorisation request, wherein the relevant data includes in particular an authorisation request cryptogram (ARQC). If the card declines the transaction offline without an ARQC returned, the process can proceed to Step 17 and the transaction will be terminated at this stage with the transaction declined.

On the other hand, if an ARQC is returned, the method moves on to Step 7 where the EMV kernel can retain and provide all the necessary EMV data to the payment application for the construction of an authorisation request message. The payment application will generate the authorisation request message based on the card/payment data received from the contactless card. However, in some other embodiments, the card itself generates the authorisation request message. In this case, the authorisation request message is sent directly to the cardholder's issuing bank but further communication from the issuing bank to the merchant terminal will have to go through a path that is trusted by the merchant, e.g. its acquirer.

It is also noteworthy that although Steps 6 & 7 have been represented as taking place while the card is still in contactless connectivity with the reader, the skilled person will appreciate that Steps 6 & 7 may be performed in full or in part once the card is no longer connected to the reader. As the authorisation message is typically generated once the cryptogram is obtained and is conventionally sent straightaway for completing the transaction, it will be appreciated that the generation of authorisation message has to be intercepted or put on hold quickly before it is transmitted for completion. Accordingly, it is likely that in practice, this will occur while the card is still in the vicinity of the reader. It is however clear that this is not a requirement for the card to be near the reader for Steps 6 & 7 or a likewise step to be carried out.

According to the techniques discussed herein, the contactless card may no longer be kept next to the reader. This facilitates the use of a contactless card as would be expected by the cardholder while maintaining compatibility with the technical systems already in place (and potentially future technical contactless payment systems) while the card may only be placed next to the reader once for completing the transaction. In particular, Steps 7-16 provide for a process similar to a deferred authorisation for an online transaction, but without requesting an AAC (Application Authentication Cryptogram). More specifically, from Step 7, the payment application can complete the EMV processing and the cardholder may remove the card from the reader while the payment application temporarily stores the authorisation data received from the EMV kernel for use at a later stage and without completing the transaction. While in both an online and offline mode, the authorisation request message is final and complete once the card is taken off the reader (which, as previously discussed, would require a "double tap" arrangement for supporting currency conversion), in this case, the authorisation request message that would otherwise be used is delayed in its generation if currency conversion is appropriate and selected which in turn reduces the need for the cardholder to present the card again to the contactless reader.

Now returning to the example of Figure 3, at Step 8, the payment application will determine whether the transaction amount if it is larger than the Cardholder Verification Method "CVM" Limit. While this step may not always be implemented, it is expected that in practice this will be a common check/determination, in view of for example [2] and [3]. Note that the CVM limit can be set on a per-country basis.

If at Step 8 it is determined that the transaction amount is less than or equal to the CVM Limit, the transaction is not eligible for currency conversion and performance of CVM is not required. As a result, the transaction can proceed to Step 13 where the Online Transaction Processing can be performed (for an online transaction) without currency conversion. The payment application can for example construct an authorisation request message (using ISO8583 message type as example) according to the following rules, which can also be used in any contactless payment transactions without currency conversion.
- For ISO8583-2003, update DE04 Amount Transaction
   - Currency code, amount transaction = terminal currency (same as DE55 tag '5F2A')
   - Currency minor unit, amount transaction = terminal currency minor unit
   - Value, amount transaction = transaction amount ( same as DE55 tag '9F02')
- For ISO8583- 1987/1993
   - DE49 Currency Code, Transaction = terminal currency (same as DE55 tag '5F2A')
   - DE04 Amount, Transaction = transaction amount (same as DE55 tag '9F02')
- Regardless of ISO8583 version, DE55 (EMV Data) shall have
   - DE55 tag '9F02' Amount, Authorized = transaction amount in terminal currency
   - DE55 tag '5F2A', Transaction Currency Code = terminal currency code
   - EMV chip data for authorisation message to be sent in DE55 as per normal

Of course, the skilled person will understand that the use of ISO8583 is merely one option. Any suitable financial message types may be used such as APACS or AS2805. As part of this Step, the payment can transmit the authorisation request message online and, once submitted, the process can proceed to Step 16 for receiving the authorisation response message from the Acquirer.

If at Step 8 it is determined that the transaction amount is greater than the CVM Limit, the process proceeds to Step 9 to perform the Dynamic Currency Conversion (DCC) Eligibility Detection. From a perspective, Step 8 can also be seen as part of the DCC Eligibility Detection wherein Step 8 is based on whether the transaction meets the relevant one or more criteria for DCC eligibility and wherein Step 9 is based on whether the contactless card meets the relevant one or more criteria for DCC eligibility. In this case the eligibility check at Step 9 is based on the following criteria for EMV cards (which can be used for both contact and contactless card eligibility detection) using tag 9F42 (ACC) and tag 5F28 (ICC) obtained in Step 5 and stored by the payment application at Step 7.

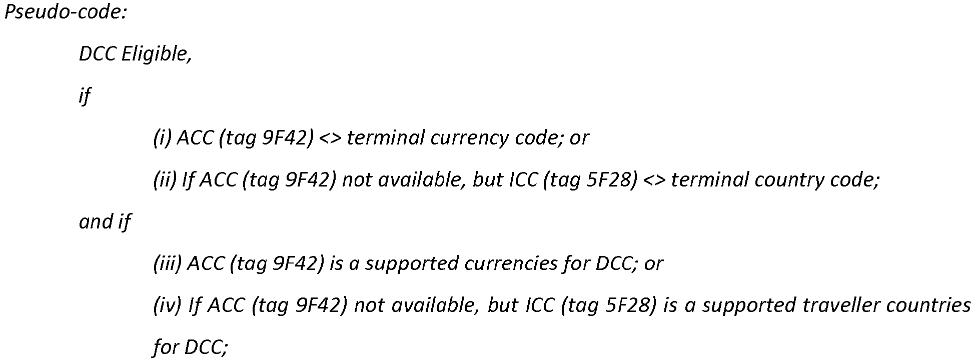

While other DCC eligibility checks can be carried out, the above example is expected to be widely used. Additionally, depending on the actual implementation, condition *(iii) & (iv)* can sometimes be performed remotely rather than by the payment application. If DCC eligibility check comes back negative, the method proceeds to Step 12 with the cardholder verification that is generally expected to be carried for transactions that have an amount greater than the CVM Limit and for generating an appropriate authorisation request message at Step 13 if the cardholder verification is successful. Note that Steps 12 & 14, Cardholder Verification, can potentially be performed after Step 16 after the authorization is completed if the cardholder verification method is signature based.

If the DCC eligibility check comes back positive, the method then proceeds to Step 10, where the payment application constructs a rate request message and forwards the rate request to obtain a rate for the foreign currency and/or country identified at Step 9. In other examples, the terminal may be configured to access a local table, database or likewise means for retrieving the currency conversion rate for the foreign currency and/or country rather than a remote host or location. Also, in a case where the foreign currency and/or country detected at Step 9 may be associated with two or more possible currencies, a plurality of rates may be obtained. For example, a card may be associated with a first currency as the account currency for this card but also associated with a country where a second currency is the official currency or the card may be a multi-currency card. Preferably, the first currency would be used as the preferred one in view of it being associated with the card and the second currency would not be used in the currency conversion process. But in some cases, a rate may be obtained for the first and second currencies and the cardholder may be offered currency conversion in both currencies, or multiple rates may be obtained for the multicurrency card and the cardholder may be offered currency conversion for the identified currencies that are supported. The cardholder may then decide to decline the currency conversion offer or to accept the currency conversion in one of the two or multiple currencies proposed.

Returning to Step 10, the payment application obtains conversion rate information for determining a converted amount of the transaction amount from the terminal currency to the foreign currency. It is noteworthy that the conversion rate information may include one or more of: an exchange rate from the terminal currency to the foreign currency, an exchange rate from the foreign currency to the terminal currency, the converted amount (e.g. if remotely determined), mark-up information. Accordingly, and regardless of the converted amount being determined at the payment application, in another element of the terminal system or remotely (relative to the payment terminal or point-of-sale terminal), the payment application can then offer to the cardholder that the transaction be completed in the foreign currency by providing the converted amount and, in some cases, the effective exchange rate from the transaction amount to the converted amount (which may differ from the obtained exchange rate if for example a mark-up percentage and/or fee has been added). In other words, the cardholder is being asked whether they wish to use the currency conversion or to complete the transaction in the terminal currency (Step 11).

If the cardholder decides not to take the currency conversion offer, then the process proceeds to Step 12 to carry out the appropriate Cardholder Verification. From Step 12, if the Cardholder Verification is successful, the process moves to Step 13, where the payment application can proceed to construct the authorisation request message as discussed in the discussion of Step 13 above and to submit the message to the Acquirer for processing. The payment application can then proceed to Step 16 to receive the authorisation response message from the Acquirer.

If on the other hand the cardholder decides to take up the DCC offer at Step 11, the process then proceeds to Step 14 to carry out the appropriate Cardholder Verification.

Once the Cardholder Verification has been performed, the process proceeds to Step 15 where the payment application can construct an authorisation request message for supporting currency conversion, for example according to the rules below. The fields that are underlined below are fields which will have different values compared to the corresponding fields in the authorisation request message without currency conversion (see the discussion of Step 13 above). It is also noteworthy that "home" currency below refers to the "foreign" currency as discussed above. In effect, in a case where the home currency (relative to the card) differs from the terminal (sometimes also called "local" or "merchant") currency, then the home currency is a foreign currency. In other cases, the home currency and the terminal currency may be identical. Returning to this case where the home currency is a foreign currency and where the cardholder has accepted the currency conversion offer, the payment application can generate an authorisation request message based on the following rules, using ISO8583 message type as an example :
- For ISO8583-2003, update DE04 Amount Transaction
   - Currency code, amount transaction = selected home currency (could be the value in the EMV tag '9F42')
   - Currency minor unit, amount transaction = selected home currency minor unit
   - Value, amount transaction = converted transaction amount in home currency
- For ISO8583- 1987/1993
   - DE49 Currency Code, Transaction = selected home currency (could be the value in the EMV tag '9F42')
   - DE04 Amount, Transaction = converted transaction amount in home currency
- Regardless of ISO8583 version, DE55 (EMV Data) shall have
   - DE55 tag '9F02' Amount, Authorized = original amount in terminal currency
   - DE55 tag '5F2A', Transaction Currency Code = terminal currency code
   - EMV chip data for authorisation message to be sent in DE55 as per normal

Again, the skilled person will appreciate that ISO8583 is merely one of several possible financial message types that can be used. In particular, the same cryptogram (which is part of the EMV chip data previously received and store) is sent in this message and in the message that is being sent without currency conversion. The payment application can then transmit the authorisation request message to the Acquirer for processing and then await the authorisation response message from the Acquirer (Step 16).

More specifically, at Step 16, the online authorisation response to the payment application indicates whether the transaction is approved or declined. The payment application can then display the appropriate messages to indicate whether the transaction was approved or declined. If for example the transaction is approved and the Cardholder Verification Method is by signature, the payment application can cause the printing of the receipt or displaying the signature panel for signature such that the CVM can be performed thereby also completing the CVM step (Step 14) at the same time.

Accordingly, there has been provided an example of a terminal system wherein the terminal system can offer currency conversion for transactions, in particular online transactions, settled using a contactless EMV card.

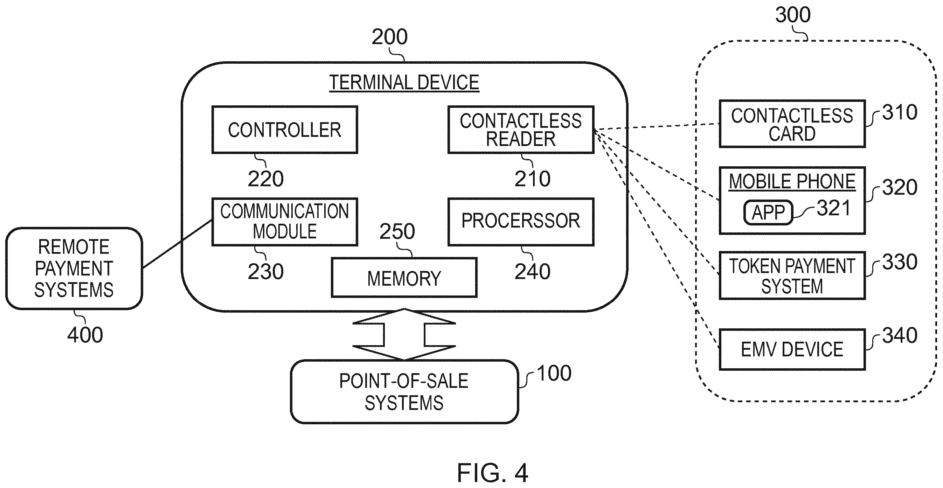

Figure 4 illustrates an example payment system comprising a payment terminal device. This payment system comprise a terminal device 200 that can be used with one or more contactless payment carriers 300 and that is connected to a remote payment system 400 and to a point-of-sale (POS) system 100.

The contactless payment carrier 300 may be any suitable contactless payment carrier such as a contactless card 310 (whether EMV, debit and/or credit card), a mobile phone 320 (for example with a payment application 321), a token payment system 330, or an EMV device 340 (for example, of any form factor). It is noteworthy that this is not exhaustive and merely illustrative. For example, the mobile phone 320 may be configured to carry out payments using tokenisation such that it would transmit a token for completing the payment rather than an account number or a card number. In other words, the mobile phone 320 and/or mobile application 321 may be configured to operate as a token payment system (e.g. token payment device) 330.

The remote payment system is a system at a remote location (relative to the terminal) that is configured to settle transactions. For example, it can be connected to the Acquirer (the bank or financial institution for the merchant), to another bank or financial institution or to any other transaction settlement element or system. For example, the terminal may be connected to a settlement system using a Blockchain or Blockchain-like technology for settling the transaction directly with the cardholder, with a financial institution or with any other financial system. It will be appreciated that the remote payment system could include a DCC rate server that dictates or negotiates currency exchange rates to be used.

In the example of Figure 4, the terminal device 200 is connected to a separate POS system 100 but, from one perspective, it may be considered as being part of the POS system 100 as the two elements operate together to offer and settle transactions. The terminal device 200 comprises a contactless reader 210 configured to read and to transmit data to a contactless payment carrier 300. For example, the contactless reader 210 may be able to transmit a request for data card and/or cryptogram, a transaction amount and/or a terminal currency to the payment carrier and to receive card/payment data from the payment carrier, such as a cryptogram for completing the transaction. As the skilled person will appreciate, although the contactless reader 210 is called "reader", it is in fact able to also transmit signals to the contactless payment means and is thus not limited to a reader with only a contactless receiver and without a contactless transmitter.

The terminal device 200 also comprises a controller 220 which is configured to control the terminal device in accordance with the techniques discussed herein, a processor 240 for carrying out instructions received from the controller 220 and a memory 250 operable to store for example card/payment data received from the contactless payment carrier 300 for use in the generation of the authorisation request message of the first or second type. Additionally, the terminal comprises a communication module 230 that is operable to send and/or receive messages with at least the remote payment system 400 at a remote location.

The POS system may in some cases be seen to include the entire POS system, comprising for example one or more POS terminals as well as one or more POS servers connected to the POS terminals and used for any of: accounting purposes, data back-up, communications with the Acquirer, etc.

As previously mentioned, the payment system of Figure 4 is an illustrative example and in other cases the system may comprise more, fewer or different elements and the elements may be distributed differently and/or the communications between the different elements can follow different paths. For example, the controller 220 of the terminal device 200 may be configured to cause the POS system 100 to send the authorisation request message to the remote payment system 400, thereby transmitting this message to the remote location for the remote payment system via the POS system.

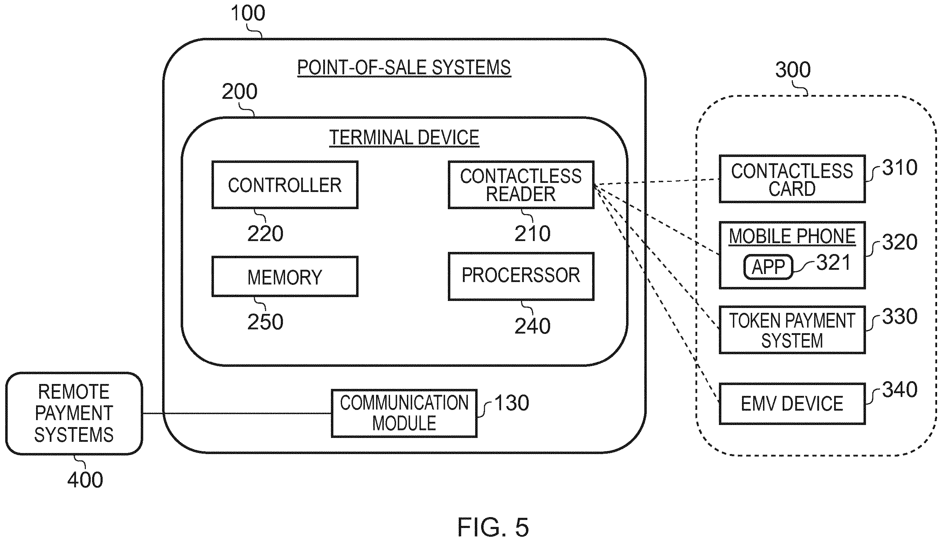

Figure 5 illustrates another example payment system comprising a payment terminal device. As this payment system is similar to the one discussed above in respect of Figure 4, the discussion of the elements of the system will not be repeated again. However, in this second illustrative example, the terminal device 200 is part of the POS system and has for example access to the communication module 130 of the POS system. Also, the controller 220 of the terminal device 200 may be at least in part shared with one or more controllers of the POS system 100. For example, the POS system can comprise a cash register device that is physically connected to the terminal device for receiving contactless payment and the two devices can be seen as a single logical entity with contactless and currency conversion capabilities. Also, the memory 250 and/or processor 240 may in fact be shared with corresponding resources of the point of sale system 100, if appropriate.

It is noteworthy that the present disclosure is applicable mostly to online transactions at a merchant point of sale but can also be used for other transactions that also face the same limitation of having to put the card in contact twice if currency conversion is to be used.

Regarding the contactless payment carriers, as previously discussed the techniques discussed herein have been developed mostly with contactless card transactions in mind but, as the skilled person will appreciate, these techniques could also be adapted to be used with other types of contactless payments means, such as a mobile payment application, tokenisation means, etc.

Additionally, while in the above description, it has been discussed that the authorisation request messages of the first or second type generated once the currency conversion eligibility and selection have been determined, the skilled person will appreciate that this may be implemented in different manner which are all within the scope of the present disclosure. For example, in some cases the terminal device may generate a temporary message with the transaction amount in the terminal currency, an identifier for the terminal currency and the cryptogram before or while the DCC eligibility and/or selection are determined. Then, if DCC is applicable and has been selected, the preliminary message may be modified to generate the preliminary message of the first type (with DCC applied). If on the other hand DCC is not applicable or has not been selected, then the preliminary message may be used as an authorisation message of the second type (if it is already in the appropriate format and includes the relevant information) or may be modified to generate the authorisation request message of the second type. In other words, the terminal device may be configured to generate a preliminary authorisation request message and to generate the authorisation request message of the first or second type based on the preliminary authorisation request message.

The CVM Limit can sometimes be used for determining DCC eligibility so that the transaction has to have a transaction amount greater than or equal to the CVM Limit for DCC to be offered (a transaction with a transaction amount less than the CVM Limit will cause DCC to not be offered). In other cases, there may not be any check on the CVM limit as part of the DCC eligibility detection.

Additionally, the terminal currency can sometimes be called the local currency or merchant currency as it is expected to be the currency used in the country of the terminal device or used by the merchant respectively. And as previously mentioned, the foreign currency is foreign relative to the terminal currency and is also sometimes referred to as the "home" currency as it is expected to be the currency of the home country of the cardholder or person whose contactless payment carrier this is.

### References

[1] "EMV^{®} Contactless Specifications for Payment Systems" Book C-3, Kernel Specification, Version 2.6, EMVCo, February 2016
[2] Visa TADG v3 (15 May 2015), H.1.3, page 237
[3] MasterCard Transaction Processing Rules (21 January 2016), page 79

## Claims

1. A payment terminal device for offering currency conversion from a terminal currency to a foreign currency for a contactless payment, the terminal being associated with a terminal currency, the payment terminal device comprising:
a contactless payment carrier reader configured to communicate with a contactless payment carrier;
a communication module configured to communicate messages with a remote location; and
a controller, configured to:
receive, from the contactless payment carrier reader, payment data from a contactless payment carrier for completing a transaction, the payment data comprising a cryptogram, wherein the transaction is associated with a transaction amount in the terminal currency;
store the received payment data including the cryptogram;
determine whether the transaction will be completed in a foreign currency or in the terminal currency, the foreign currency being a currency that differs from the terminal currency;
if it is determined that the transaction will be completed in the foreign currency, generate an authorisation request message of a first type, wherein an authorisation request message of the first type includes a foreign currency indicator identifying the foreign currency; a converted transaction amount, the converted transaction amount corresponding to the transaction amount converted to the foreign currency, a terminal currency indicator identifying the terminal currency, the transaction amount and the cryptogram;
if it is determined that the transaction will be completed in the terminal currency, generate an authorisation request message of a second type, wherein an authorisation request message of the second type includes the terminal currency indicator, the transaction amount and the cryptogram; and
transmit, via the communication module, the generated authorisation request message to the remote location for completing the transaction.

2. The payment terminal device of claim 1, wherein the controller being configured to determine whether the transaction will be completed in a foreign currency or in the terminal currency comprises the controller being configured to:
determine that the transaction is eligible for a currency conversion service;
receive a user selection indicating whether the use of the currency conversion service has been selected; and
upon receipt of a user selection that the use of the currency conversion service has been selected, determine that the transaction will be completed in the foreign currency.

3. The payment terminal device of claim 2, wherein the controller being configured to determine that the transaction is eligible for a currency conversion service comprises the controller being configured to:
detect, based on the payment data, that the contactless payment carrier is associated with a currency that differs from the terminal currency and/or that the contactless payment carrier is associated with a country that differs from a country associated with the payment terminal device.

4. The payment terminal device of claim 2 or 3, wherein the controller being configured to determine that the transaction is eligible for a currency conversion service comprises the controller being configured to:
determine that the transaction amount is above a pre-determined threshold.

5. The payment terminal device of any preceding claim wherein the controller is configured to generate a preliminary authorisation request message including the terminal currency indicator, the transaction amount and the cryptogram and wherein:
the controller being configured to generate an authorisation request message of the first type comprises the controller being configured to modify the preliminary authorisation request message to include the foreign currency indicator and the converted transaction amount; and
if it is determined that the transaction will be completed in the terminal currency, the controller is configured to use the preliminary authorisation request message as the authorisation request message of the second type.

6. The payment terminal device of any preceding claim wherein the controller is configured to request the payment data from the contactless payment carrier for completing the transaction.

7. The payment terminal device of claim 6 wherein the controller being configured to request the payment data from the contactless payment carrier comprises the controller being configured to transmit a request to the contactless payment carrier, request comprising the transaction amount and the terminal currency.

8. The payment terminal device of any preceding claim wherein the contactless payment carrier is one of a contactless credit card, a contactless debit card, a contactless card, a contactless EMV card, a contactless chip card, an EMV device, a mobile phone, a mobile application and a token payment system.

9. A method of operating a payment terminal device for offering currency conversion from a terminal currency to a foreign currency for a contactless payment, the payment terminal device being associated with a terminal currency, the method comprising:
receiving, from a contactless payment carrier reader, payment data from a contactless payment carrier for completing a transaction, the payment data comprising a cryptogram, wherein the transaction is associated with a transaction amount in the terminal currency;
storing the received payment data including the cryptogram;
determining whether the transaction will be completed in a foreign currency or in the terminal currency, the foreign currency being a currency that differs from the terminal currency;
if it is determined that the transaction will be completed in the foreign currency, generating an authorisation request message of a first type, wherein an authorisation request message of the first type includes a foreign currency indicator identifying the foreign currency; a converted transaction amount, the converted transaction amount corresponding to the transaction amount converted to the foreign currency, a terminal currency indicator identifying the terminal currency, the transaction amount and the cryptogram;
if it is determined that the transaction will be completed in the terminal currency, generating an authorisation request message of a second type, wherein an authorisation request message of the second type includes the terminal currency indicator, the transaction amount and the cryptogram; and
transmitting the generated authorisation request message to the remote location for completing the transaction.

10. The method of claim 9, wherein determining whether the transaction will be completed in a foreign currency or in the terminal currency comprises:
determining that the transaction is eligible for a currency conversion service;
receiving a user selection indicating whether the use of the currency conversion service has been selected; and
upon receipt of a user selection that the use of the currency conversion service has been selected, determining that the transaction will be completed in the foreign currency.

11. The method of claim 10, wherein determining that the transaction is eligible for a currency conversion service comprises:
detecting, based on the payment data, that the contactless payment carrier is associated with a currency that differs from the terminal currency and/or that the contactless payment carrier is associated with a country that differs from a country associated with the payment terminal device.

12. The method of claim 10 or 11, wherein determining that the transaction is eligible for a currency conversion service comprises determining that the transaction amount is above a pre-determined threshold.

13. The method of any one of claims 9 to 12 further comprising generating a preliminary authorisation request message including the terminal currency indicator, the transaction amount and the cryptogram and wherein:
generating an authorisation request message of the first type comprises modifying the preliminary authorisation request message to include the foreign currency indicator and the converted transaction amount; and
if it is determined that the transaction will be completed in the terminal currency, generating an authorisation request message of the second type comprises using the preliminary authorisation request message as the authorisation request message of the second type.

14. The method of any one of claims 9 to 13 comprising requesting the payment data from the contactless payment carrier for completing the transaction.

15. The method of claim 14 wherein requesting the payment data from the contactless payment carrier comprises transmitting a request to the contactless payment carrier, the request comprising the transaction amount and the terminal currency.

16. The method of any one of claims 9 to 15 wherein the contactless payment carrier is one of a contactless credit card, a contactless debit card, a contactless card, a contactless EMV card, a contactless chip card, an EMV device, a mobile phone, a mobile application and a token payment system.

## Patentansprüche

1. Zahlungsendgerätvorrichtung zum Anbieten einer Währungsumrechnung von einer Endgerätwährung in eine Fremdwährung für eine kontaktlose Zahlung, wobei das Endgerät einer Endgerätwährung zugeordnet ist, wobei die Zahlungsendgerätvorrichtung Folgendes umfasst:
einen Leser eines Trägers für kontaktlose Zahlungen, der konfiguriert ist, um mit einem Träger für kontaktlose Zahlungen zu kommunizieren;
ein Kommunikationsmodul, das konfiguriert ist, um Meldungen mit einem entfernten Ort zu kommunizieren; und eine Steuereinheit, die für Folgendes konfiguriert ist:
Empfangen, von dem Leser eines Trägers für kontaktlose Zahlungen, von Zahlungsdaten von einem Träger für kontaktlose Zahlungen zum Abschließen einer Transaktion, wobei die Zahlungsdaten ein Kryptogramm umfassen, wobei die Transaktion einem Transaktionsbetrag in der Endgerätwährung zugeordnet ist;
Speichern der empfangenen Zahlungsdaten, die das Kryptogramm enthalten;
Bestimmen, ob die Transaktion in einer Fremdwährung oder in der Endgerätwährung abgeschlossen werden wird, wobei die Fremdwährung eine Währung ist, die sich von der Endgerätwährung unterscheidet;
wenn bestimmt wird, dass die Transaktion in der Fremdwährung abgeschlossen werden wird, Erzeugen einer Autorisierungsanforderungsmeldung eines ersten Typs, wobei eine Autorisierungsanforderungsmeldung des ersten Typs eine Fremdwährungsangabe, die die Fremdwährung identifiziert, enthält; einen umgerechneten Transaktionsbetrag, wobei der umgerechnete Transaktionsbetrag dem in die Fremdwährung umgerechneten Transaktionsbetrag entspricht, eine Endgerätwährungsangabe, die die Endgerätwährung identifiziert, den Transaktionsbetrag und das Kryptogramm;
wenn bestimmt wird, dass die Transaktion in der Endgerätwährung abgeschlossen werden wird, Erzeugen einer Autorisierungsanforderungsmeldung eines zweiten Typs, wobei eine Autorisierungsanforderungsmeldung des zweiten Typs die Endgerätwährungsangabe, den Transaktionsbetrag und das Kryptogramm enthält; und
Übertragen, über das Kommunikationsmodul, der erzeugten Autorisierungsanforderungsmeldung an den entfernten Ort zum Abschließen der Transaktion.

2. Zahlungsendgerätvorrichtung nach Anspruch 1, wobei die Gegebenheit, dass die Steuereinheit konfiguriert ist, um zu bestimmen, ob die Transaktion in einer Fremdwährung oder in der Endgerätwährung abgeschlossen werden wird, umfasst, dass die Steuereinheit für Folgendes konfiguriert ist:
Bestimmen, dass die Transaktion für einen Währungsumrechnungsdienst infrage kommt;
Empfangen einer Benutzerauswahl, die angibt, ob die Nutzung des Währungsumrechnungsdiensts ausgewählt worden ist; und
nach dem Empfang einer Benutzerauswahl, dass die Nutzung des Währungsumrechnungsdiensts ausgewählt worden ist, Bestimmen, dass die Transaktion in der Fremdwährung abgeschlossen werden wird.

3. Zahlungsendgerätvorrichtung nach Anspruch 2, wobei die Gegebenheit, dass die Steuereinheit konfiguriert ist, um zu bestimmen, dass die Transaktion für einen Währungsumrechnungsdienst infrage kommt, umfasst, dass die Steuereinheit für Folgendes konfiguriert ist:
Erkennen, auf der Basis der Zahlungsdaten, dass der Träger für kontaktlose Zahlungen einer Währung, die sich von der Endgerätwährung unterscheidet, zugeordnet ist und/oder dass der Träger für kontaktlose Zahlungen einem Land, das sich von einem der Zahlungsendgerätvorrichtung zugeordneten Land unterscheidet, zugeordnet ist.

4. Zahlungsendgerätvorrichtung nach Anspruch 2 oder 3, wobei die Gegebenheit, dass die Steuereinheit konfiguriert ist, um zu bestimmen, dass die Transaktion für einen Währungsumrechnungsdienst infrage kommt, umfasst, dass die Steuereinheit für Folgendes konfiguriert ist:
Bestimmen, dass der Transaktionsbetrag über einem vorher festgelegten Schwellenwert liegt.

5. Zahlungsendgerätvorrichtung nach einem der vorhergehenden Ansprüche, wobei die Steuereinheit konfiguriert ist, um eine vorläufige Autorisierungsanforderungsmeldung, die die Endgerätwährungsangabe, den Transaktionsbetrag und das Kryptogramm enthält, zu erzeugen, und wobei:
die Gegebenheit, dass die Steuereinheit konfiguriert ist, um eine Autorisierungsanforderungsmeldung des ersten Typs zu erzeugen, umfasst, dass die Steuereinheit konfiguriert ist, um die vorläufige Autorisierungsanforderungsmeldung zu modifizieren, sodass sie die Fremdwährungsangabe und den umgerechneten Transaktionsbetrag enthält; und,
wenn bestimmt wird, dass die Transaktion in der Endgerätwährung abgeschlossen werden wird, die Steuereinheit konfiguriert ist, um die vorläufige Autorisierungsanforderungsmeldung als die Autorisierungsanforderungsmeldung des zweiten Typs zu nutzen.

6. Zahlungsendgerätvorrichtung nach einem der vorhergehenden Ansprüche, wobei die Steuereinheit konfiguriert ist, um die Zahlungsdaten von dem Träger für kontaktlose Zahlungen zum Abschließen der Transaktion anzufordern.

7. Zahlungsendgerätvorrichtung nach Anspruch 6, wobei die Gegebenheit, dass die Steuereinheit konfiguriert ist, um die Zahlungsdaten von dem Träger für kontaktlose Zahlungen anzufordern, umfasst, dass die Steuereinheit konfiguriert ist, um eine Anforderung an den Träger für kontaktlose Zahlungen zu übertragen, wobei die Anforderung den Transaktionsbetrag und die Endgerätwährung umfasst.

8. Zahlungsendgerätvorrichtung nach einem der vorhergehenden Ansprüche, wobei der Träger für kontaktlose Zahlungen eines von einer kontaktlosen Kreditkarte, einer kontaktlosen Debitkarte, einer kontaktlosen Karte, einer kontaktlosen EMV-Karte, einer kontaktlosen Chipkarte, einer EMV-Vorrichtung, einem Mobiltelefon, einer mobilen Anwendung und einem Token-Zahlungssystem ist.

9. Verfahren zum Betreiben einer Zahlungsendgerätvorrichtung zum Anbieten einer Währungsumrechnung von einer Endgerätwährung in eine Fremdwährung für eine kontaktlose Zahlung, wobei die Zahlungsendgerätvorrichtung einer Endgerätwährung zugeordnet ist, wobei das Verfahren Folgendes umfasst:
Empfangen, von einem Leser eines Trägers für kontaktlose Zahlungen, von Zahlungsdaten von einem Träger für kontaktlose Zahlungen zum Abschließen einer Transaktion, wobei die Zahlungsdaten ein Kryptogramm umfassen, wobei die Transaktion einem Transaktionsbetrag in der Endgerätwährung zugeordnet ist;
Speichern der empfangenen Zahlungsdaten, die das Kryptogramm enthalten;
Bestimmen, ob die Transaktion in einer Fremdwährung oder in der Endgerätwährung abgeschlossen werden wird, wobei die Fremdwährung eine Währung ist, die sich von der Endgerätwährung unterscheidet;
wenn bestimmt wird, dass die Transaktion in der Fremdwährung abgeschlossen werden wird, Erzeugen einer Autorisierungsanforderungsmeldung eines ersten Typs, wobei eine Autorisierungsanforderungsmeldung des ersten Typs eine Fremdwährungsangabe, die die Fremdwährung identifiziert, enthält; einen umgerechneten Transaktionsbetrag, wobei der umgerechnete Transaktionsbetrag dem in die Fremdwährung umgerechneten Transaktionsbetrag entspricht, eine Endgerätwährungsangabe, die die Endgerätwährung identifiziert, den Transaktionsbetrag und das Kryptogramm;
wenn bestimmt wird, dass die Transaktion in der Endgerätwährung abgeschlossen werden wird, Erzeugen einer Autorisierungsanforderungsmeldung eines zweiten Typs, wobei eine Autorisierungsanforderungsmeldung des zweiten Typs die Endgerätwährungsangabe, den Transaktionsbetrag und das Kryptogramm enthält; und
Übertragen der erzeugten Autorisierungsanforderungsmeldung an den entfernten Ort zum Abschließen der Transaktion.

10. Verfahren nach Anspruch 9, wobei das Bestimmen, ob die Transaktion in einer Fremdwährung oder in der Endgerätwährung abgeschlossen werden wird, Folgendes umfasst:
Bestimmen, dass die Transaktion für einen Währungsumrechnungsdienst infrage kommt;
Empfangen einer Benutzerauswahl, die angibt, ob die Nutzung des Währungsumrechnungsdiensts ausgewählt worden ist; und
nach dem Empfang einer Benutzerauswahl, dass die Nutzung des Währungsumrechnungsdiensts ausgewählt worden ist, Bestimmen, dass die Transaktion in der Fremdwährung abgeschlossen werden wird.

11. Verfahren nach Anspruch 10, wobei das Bestimmen, dass die Transaktion für einen Währungsumrechnungsdienst infrage kommt, Folgendes umfasst:
Erkennen, auf der Basis der Zahlungsdaten, dass der Träger für kontaktlose Zahlungen einer Währung, die sich von der Endgerätwährung unterscheidet, zugeordnet ist und/oder dass der Träger für kontaktlose Zahlungen einem Land, das sich von einem der Zahlungsendgerätvorrichtung zugeordneten Land unterscheidet, zugeordnet ist.

12. Verfahren nach Anspruch 10 oder 11, wobei das Bestimmen, dass die Transaktion für einen Währungsumrechnungsdienst infrage kommt, das Bestimmen umfasst, dass der Transaktionsbetrag über einem vorher festgelegten Schwellenwert liegt.

13. Verfahren nach einem der Ansprüche 9 bis 12, das ferner das Erzeugen einer vorläufigen Autorisierungsanforderungsmeldung umfasst, die die Endgerätwährungsangabe, den Transaktionsbetrag und das Kryptogramm enthält, und wobei:
das Erzeugen einer Autorisierungsanforderungsmeldung des ersten Typs das Modifizieren der vorläufigen Autorisierungsanforderungsmeldung umfasst, sodass sie die Fremdwährungsangabe und den umgerechneten Transaktionsbetrag enthält; und,
wenn bestimmt wird, dass die Transaktion in der Endgerätwährung abgeschlossen werden wird, das Erzeugen einer Autorisierungsanforderungsmeldung des zweiten Typs das Nutzen der vorläufigen Autorisierungsanforderungsmeldung als die Autorisierungsanforderungsmeldung des zweiten Typs umfasst.

14. Verfahren nach einem der Ansprüche 9 bis 13, das das Anfordern der Zahlungsdaten von dem Träger für kontaktlose Zahlungen zum Abschließen der Transaktion umfasst.

15. Verfahren nach Anspruch 14, wobei das Anfordern der Zahlungsdaten von dem Träger für kontaktlose Zahlungen das Übertragen einer Anforderung an den Träger für kontaktlose Zahlungen umfasst, wobei die Anforderung den Transaktionsbetrag und die Endgerätwährung umfasst.

16. Verfahren nach einem der Ansprüche 9 bis 15, wobei der Träger für kontaktlose Zahlungen eines von einer kontaktlosen Kreditkarte, einer kontaktlosen Debitkarte, einer kontaktlosen Karte, einer kontaktlosen EMV-Karte, einer kontaktlosen Chipkarte, einer EMV-Vorrichtung, einem Mobiltelefon, einer mobilen Anwendung und einem Token-Zahlungssystem ist.

## Revendications

1. Dispositif terminal de paiement permettant d'offrir une conversion de devise d'une devise du terminal en une devise étrangère pour un paiement sans contact, le terminal étant associé à une devise du terminal, le dispositif terminal de paiement comprenant :
un lecteur de support de paiement sans contact configuré pour communiquer avec un support de paiement sans contact ;
un module de communication configuré pour communiquer des messages à un emplacement distant ; et
un contrôleur, configuré pour :
recevoir, depuis le lecteur de support de paiement sans contact, des données de paiement provenant d'un support de paiement sans contact pour effectuer une transaction, les données de paiement comprenant un cryptogramme, la transaction étant associée à un montant de transaction dans la devise du terminal ;
stocker les données de paiement reçues, y compris le cryptogramme ;
déterminer si la transaction sera effectuée dans une devise étrangère ou dans la devise du terminal, la devise étrangère étant une devise différente de la devise du terminal ;
s'il est déterminé que la transaction sera effectuée dans la devise étrangère, générer un message de demande d'autorisation d'un premier type, dans lequel un message de demande d'autorisation du premier type comprend un indicateur de devise étrangère identifiant la devise étrangère ; un montant de transaction converti, le montant de transaction converti correspondant au montant de transaction converti en devise étrangère, un indicateur de devise du terminal identifiant la devise du terminal, le montant de transaction et le cryptogramme ;
s'il est déterminé que la transaction sera effectuée dans la devise du terminal, générer un message de demande d'autorisation d'un second type, dans lequel un message de demande d'autorisation du second type comprend l'indicateur de devise du terminal, le montant de transaction et le cryptogramme ; et
transmettre, par l'intermédiaire du module de communication, le message de demande d'autorisation généré à l'emplacement distant afin d'effectuer la transaction.

2. Dispositif terminal de paiement selon la revendication 1, dans lequel le contrôleur configuré pour déterminer si la transaction sera effectuée dans une devise étrangère ou dans la devise du terminal comprend le contrôleur configuré pour :
déterminer que la transaction est éligible à un service de conversion de devise ;
recevoir une sélection d'utilisateur indiquant si l'utilisation du service de conversion de devise a été sélectionnée ; et
suite à la réception d'une sélection de l'utilisateur selon laquelle l'utilisation du service de conversion de devise a été sélectionnée, déterminer que la transaction sera effectuée dans la devise étrangère.

3. Dispositif terminal de paiement selon la revendication 2, dans lequel le contrôleur configuré pour déterminer que la transaction est éligible à un service de conversion de devise comprend le contrôleur configuré pour :
détecter, sur la base des données de paiement, que le support de paiement sans contact est associé à une devise différente de la devise du terminal et/ou que le support de paiement sans contact est associé à un pays différent d'un pays associé au dispositif terminal de paiement.

4. Dispositif terminal de paiement selon la revendication 2 ou 3, dans lequel le contrôleur configuré pour déterminer que la transaction est éligible à un service de conversion de devise comprend le contrôleur configuré pour :
déterminer que le montant de transaction est supérieur à un seuil prédéterminé.

5. Dispositif terminal de paiement selon l'une quelconque des revendications précédentes, dans lequel le contrôleur est configuré pour générer un message de demande d'autorisation préliminaire incluant l'indicateur de devise du terminal, le montant de transaction et le cryptogramme et dans lequel :
le contrôleur configuré pour générer un message de demande d'autorisation du premier type comprend le contrôleur configuré pour modifier le message de demande d'autorisation préliminaire afin d'inclure l'indicateur de devise étrangère et le montant de transaction converti ; et
s'il est déterminé que la transaction sera effectuée dans la devise du terminal, le contrôleur est configuré pour utiliser le message de demande d'autorisation préliminaire comme message de demande d'autorisation du second type.

6. Dispositif terminal de paiement selon l'une quelconque des revendications précédentes, dans lequel le contrôleur est configuré pour demander les données de paiement au support de paiement sans contact pour effectuer la transaction.

7. Dispositif terminal de paiement selon la revendication 6, dans lequel le contrôleur configuré pour demander les données de paiement au support de paiement sans contact comprend le contrôleur configuré pour transmettre une demande au support de paiement sans contact, la demande comprenant le montant de transaction et la devise du terminal.

8. Dispositif terminal de paiement selon l'une quelconque des revendications précédentes, dans lequel le support de paiement sans contact est l'un d'une carte de crédit sans contact, d'une carte de débit sans contact, d'une carte sans contact, d'une carte EMV sans contact, d'une carte à puce sans contact, d'un dispositif EMV, d'un téléphone mobile, d'une application mobile et d'un système de paiement par jetons.

9. Procédé de fonctionnement d'un dispositif terminal de paiement permettant d'offrir une conversion de devise d'une devise du terminal en une devise étrangère pour un paiement sans contact, le dispositif terminal de paiement étant associé à une devise du terminal, le procédé comprenant :
la réception, depuis un lecteur de support de paiement sans contact, de données de paiement d'un support de paiement sans contact pour effectuer une transaction, les données de paiement comprenant un cryptogramme, la transaction étant associée à un montant de transaction dans la devise du terminal ;
le stockage des données de paiement reçues, y compris le cryptogramme ;
la détermination de si la transaction sera effectuée dans une devise étrangère ou dans la devise du terminal, la devise étrangère étant une devise différente de la devise du terminal ;
s'il est déterminé que la transaction sera effectuée dans la devise étrangère, la génération d'un message de demande d'autorisation d'un premier type, dans lequel un message de demande d'autorisation du premier type comprend un indicateur de devise étrangère identifiant la devise étrangère ; un montant de transaction converti,
le montant de transaction converti correspondant au montant de transaction converti en devise étrangère, un indicateur de devise du terminal identifiant la devise du terminal, le montant de transaction et le cryptogramme ;
s'il est déterminé que la transaction sera effectuée dans la devise du terminal, la génération d'un message de demande d'autorisation d'un second type, dans lequel un message de demande d'autorisation du second type comprend l'indicateur de devise du terminal, le montant de transaction et le cryptogramme ; et
la transmission du message de demande d'autorisation généré à l'emplacement distant afin d'effectuer la transaction.

10. Procédé selon la revendication 9, dans lequel la détermination de si la transaction sera effectuée dans une devise étrangère ou dans la devise du terminal comprend :
la détermination de si la transaction est éligible à un service de conversion de devise ;
la réception d'une sélection d'utilisateur indiquant si l'utilisation du service de conversion de devise a été sélectionnée ; et
suite à la réception d'une sélection de l'utilisateur selon laquelle l'utilisation du service de conversion de devise a été sélectionnée, la détermination que la transaction sera effectuée dans la devise étrangère.

11. Procédé selon la revendication 10, dans lequel la détermination que la transaction est éligible à un service de conversion de devise comprend :
la détection, sur la base des données de paiement, que le support de paiement sans contact est associé à une devise différente de la devise du terminal et/ou que le support de paiement sans contact est associé à un pays différent d'un pays associé au dispositif terminal de paiement.

12. Procédé selon la revendication 10 ou 11, dans lequel la détermination que la transaction est éligible à un service de conversion de devise comprend la détermination que le montant de transaction est supérieur à un seuil prédéterminé.

13. Procédé selon l'une quelconque des revendications 9 à 12, comprenant en outre la génération d'un message de demande d'autorisation préliminaire incluant l'indicateur de devise du terminal, le montant de transaction et le cryptogramme et dans lequel :
la génération d'un message de demande d'autorisation du premier type comprend la modification du message de demande d'autorisation préliminaire pour inclure l'indicateur de devise étrangère et le montant de transaction converti ; et
s'il est déterminé que la transaction sera effectuée dans la devise du terminal, la génération d'un message de demande d'autorisation du second type comprend l'utilisation du message de demande d'autorisation préliminaire comme message de demande d'autorisation du second type.

14. Procédé selon l'une quelconque des revendications 9 à 13, comprenant la demande des données de paiement auprès du support de paiement sans contact pour effectuer la transaction.

15. Procédé selon la revendication 14, dans lequel la demande des données de paiement auprès du support de paiement sans contact comprend la transmission d'une demande au support de paiement sans contact, la demande comprenant le montant de transaction et la devise du terminal.

16. Procédé selon l'une quelconque des revendications 9 à 15, dans lequel le support de paiement sans contact est l'un d'une carte de crédit sans contact, d'une carte de débit sans contact, d'une carte sans contact, d'une carte EMV sans contact, d'une carte à puce sans contact, d'un dispositif EMV, d'un téléphone mobile, d'une application mobile et d'un système de paiement par jetons.
